(19) **Europäisches Patentamt**
**European Patent Office**
**Office européen des brevets**

(11) **EP 2 195 919 B1**

(12) **FASCICULE DE BREVET EUROPEEN**

(45) Date de publication et mention
de la délivrance du brevet:
**07.11.2012 Bulletin 2012/45**

(21) Numéro de dépôt: **08864727.6**

(22) Date de dépôt: **03.10.2008**

(51) Int Cl.:
***H02P 21/00*** *(2006.01)*     ***H02P 23/00*** *(2006.01)*

(86) Numéro de dépôt international:
**PCT/FR2008/001392**

(87) Numéro de publication internationale:
**WO 2009/080911 (02.07.2009 Gazette 2009/27)**

(54) **PROCÉDÉ POUR CALCULER, À L'AIDE D'UN ORDINATEUR, UN RÉGULATEUR TRIPHASÉ D'UN SYSTÈME TRIPHASÉ AYANT UN MODÈLE TRIPHASÉ**

**VERFAHREN ZUR COMPUTERUNTERSTÜTZTEN BERECHNUNG EINES DREHSTROMREGULATORS EINES DREHSTROMSYSTEMS MIT EINEM DREHSTROMMODELL**

**METHOD FOR CALCULATING, USING A COMPUTER, A THREE-PHASE REGULATOR OF A THREE-PHASE SYSTEM HAVING A THREE-PHASE MODEL**

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **05.10.2007 FR 0706998**

(43) Date de publication de la demande:
**16.06.2010 Bulletin 2010/24**

(73) Titulaire: **Université De Poitiers**
**86034 Poitiers Cedex (FR)**

(72) Inventeur: **RAMBAULT, Laurent**
**F-86180 Bruxerolles (FR)**

(74) Mandataire: **Novagraaf Technologies**
**122 rue Edouard Vaillant**
**92593 Levallois-Perret Cedex (FR)**

(56) Documents cités:
**US-A- 6 166 928**     **US-A1- 2004 056 487**

- **FERNANDO BRIZ DEL BLANCO ET AL: "Dynamic Analysis of Current Regulators for AC Motors Using Complex Vectors", IEEE TRANSACTIONS ON INDUSTRY APPLICATIONS, IEEE SERVICE CENTER, PISCATAWAY, NJ, US, vol. 35, no. 6, 1 décembre 1999 (1999-12-01), XP011022663, ISSN: 0093-9994**
- **BRIZ F ET AL: "Analysis and design of current regulators using complex vectors", INDUSTRY APPLICATIONS CONFERENCE, 1997. THIRTY-SECOND IAS ANNUAL MEETI NG, IAS '97., CONFERENCE RECORD OF THE 1997 IEEE NEW ORLEANS, LA, USA 5-9 OCT. 1997, NEW YORK, NY, USA,IEEE, US, vol. 2, 5 octobre 1997 (1997-10-05), pages 1504-1511, XP010248522, ISBN: 978-0-7803-4067-1**
- **DALTON P M ET AL: "A study of induction motor current control using the complex number representation", 19891001; 19891001 - 19891005, 1 octobre 1989 (1989-10-01), pages 355-361, XP010090952,**
- **GATARIC S ET AL: "Modeling and design of three-phase systems using complex transfer functions", POWER ELECTRONICS SPECIALISTS CONFERENCE, 1999. PESC 99. 30TH ANNUAL I EEE CHARLESTON, SC, USA 27 JUNE-1 JULY 1999, PISCATAWAY, NJ, USA,IEEE, US, vol. 2, 27 juin 1999 (1999-06-27), pages 691-697, XP010346783, ISBN: 978-0-7803-5421-0**

EP 2 195 919 B1

**EP 2 195 919 B1**

**Description**

L'invention se rapporte à un procédé pour calculer, à l'aide d'un ordinateur, un régulateur triphasé d'un système triphasé ayant un modèle triphasé.

L'invention se rapporte plus particulièrement à un procédé pour calculer, à l'aide d'un ordinateur, un régulateur triphasé d'un système triphasé ayant un modèle triphasé, le procédé comprenant des étapes consistant à :

- générer un modèle diphasé de Park du système triphasé à partir du modèle triphasé du système triphasé;
- calculer le régulateur triphasé à partir du modèle diphasé de Park du système triphasé.

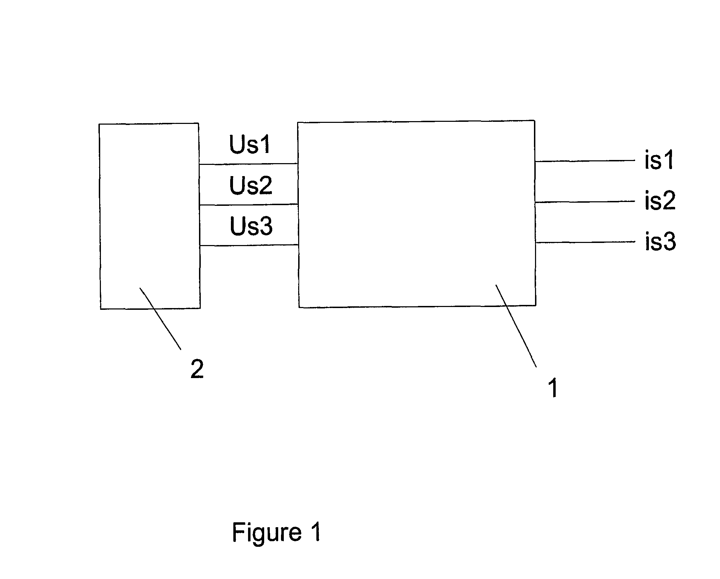

Un tel procédé pour calculer un régulateur triphasé d'un système triphasé ayant un modèle triphasé est connu de l'homme du métier, notamment dans le domaine des variateurs de vitesse industriel pour le pilotage des machines électriques. Ce procédé connu est illustré figure 1.

Comme illustré sur la figure 1, un système triphasé 1 est piloté par une carte 2 formant un variateur et comprenant un filtre numérique sur lequel est programmé un régulateur triphasé destiné à assurer le pilotage des variables d'entrée du système triphasé 1, par exemple des tensions par rétroaction des variables de sortie du système triphasé 1, par exemple des courants. Un onduleur non représenté peut être positionné entre la carte 2 et le système triphasé 1 pour actionner ce dernier en fonction des paramètres de régulation reçus de la carte 2.

De façon connue, un tel système triphasé 1 a un modèle triphasé, de sorte que les variables d'entrées et les variables de sortie sont exprimées dans un repère triphasé sous la forme de trois composantes. Dans le cas d'un machine asynchrone 2 par exemple, le courant statorique est exprimé dans le modèle triphasé avec trois composantes triphasées ($i_{s1}$, $i_{s2}$, $i_{s3}$). De même, le flux rotorique et le couple sont exprimés dans le modèle triphasé ainsi que les trois composantes triphasées ($u_{s1}$, $u_{s2}$, $u_{s3}$) du signal de commande.

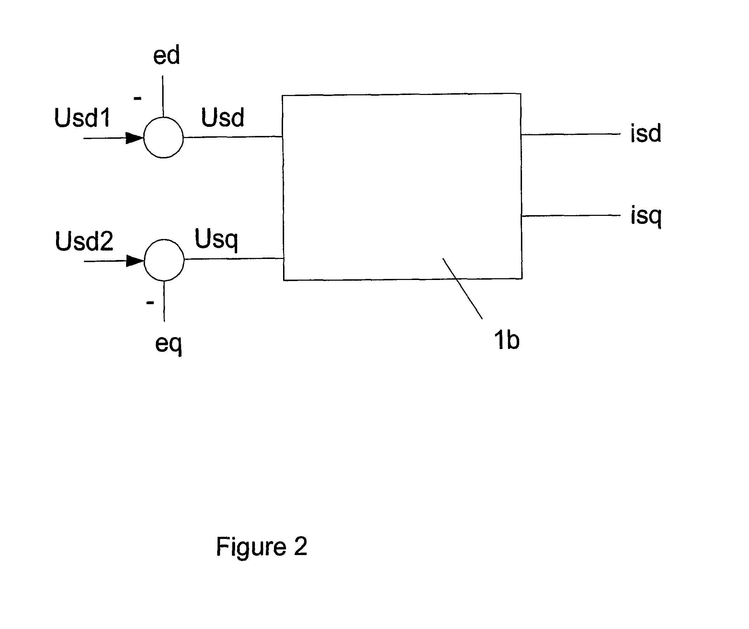

Comme illustré figure 2, pour déterminer les caractéristiques du régulateur triphasé de la carte 2, on génère d'abord un modèle diphasé de Park 1b du système triphasé 1 à partir du modèle triphasé de ce système triphasé 1. De façon connue en soi, le modèle diphasé de Park est déterminé à partir du modèle triphasé 1b par une transformation de Concordia, puis par une transformation de Park.

Dans ce modèle diphasé de Park, les données d'entrée et de sortie sont exprimées dans le repère de Park (d, q) et se décomposent selon deux composantes ($u_{sd}$, $u_{sq}$) et ($i_{sd}$, $i_{sq}$) dans ce repère. Le modèle diphasé de Park est un modèle multivariable à deux entrées et deux sorties, les deux entrées et les deux sorties étant couplées.

Ainsi, les composantes des axes d et q sont couplées et il est nécessaire, pour maîtriser les deux courants statoriques de façon indépendante, de réaliser un découplage des composantes des axes d et q.

Pour ce faire, il est connu de calculer deux termes de découplage $e_d$ et eq et de soustraire ces termes de découplage aux données d'entrée pour définir de nouvelles variables d'entrée $u_{sd1}$ et $u_{sq1}$. Dans ce modèle, les deux axes d et q sont découplés de sorte qu'une action sur la composante $u_{sd1}$ ne modifie pas la composante $i_{sq}$, et une action sur la composante $u_{sq1}$ ne modifie pas la composante $i_{sd}$.

À partir de ce modèle découplé, on calcule, de façon connue en soi, un régulateur diphasé dans le repère de Park. Par une transformation inverse, on calcule ensuite le régulateur triphasé à implémenter dans la carte 3 sous la forme d'un filtre numérique.

Un tel procédé a toutefois des inconvénients.

En effet, dans le procédé précédemment décrit, les termes de découplage $e_d$ et eq soustraits sont des termes issus d'un observateur et correspondent par exemple au flux rotorique et à la vitesse de rotation dans le cas d'une commande sans capteur. Dès lors, de tels termes sont inopérants lors d'un régime transitoire. En outre, il est complexe de faire des analyses de robustesse du modèle du fait de ces termes issus d'un observateur.

Or, il est important, dans les applications industrielles des systèmes triphasés, de pouvoir démontrer la robustesse du système.

Pour cette raison, l'art antérieur propose la mise en oeuvre des régulatuers en notation complexe, par exemple US6166928, US2004056487 et

FERNANDO BRIZ DEL BLANCO ET AL: Dynamic Analysis of Current Regulators for AC Motors Using Complex Vectors" IEEE TRANSACTIONS ON INDUSTRY APPLICATIONS, IEEE SERVICE CENTER, PISCATAWAY, NJ, US, vol. 35, no. 6, 1 décembre 1999 (1999-12-01), XP01 1022663 ISSN: 0093-9994

BRIZ F ET AL: "Analysis and design of current regulators using complex vectors" INDUSTRY APPLICATIONS CONFERENCE, 1997. THIRTY-SECOND IAS ANNUAL MEETING, IAS 97., CONFERENCE RECORD OF THE 1997 IEEE NEW ORLEANS, LA, USA 5-9 OCT. 1997, NEW YORK, NY, USA,IEEE, US, vol. 2, 5 octobre 1997 (1997-10-05), pages 1504-1511, XPO1 0248522 ISBN: 978-0-7803-4067-1

DALTON P M ET AL: "A study of induction motor current control using the complex number representation" 19891001; 19891001 - 19891005, 1 octobre 1989 (1989-10-01), pages 355-361, XPO1 0090952

GATARIC S ET AL: Modeling and design of three-phase systems using complex transfer functions POW ER ELECTRON ICS SPECIALISTS CONFERENCE, 1999. PESC 99. 30TH ANNUAL I EEE CHARLESTON, SC, USA 27 JUNE-i JULY 1999, PISCATAWAY, NJ, USA,IEEE, US, vol. 2, 27 juin 1999 (1999-06-27), pages 691-697, XP010346783 ISBN: 978-0-7803-5421-0.

Un but de l'invention est de faciliter l'analyse de robustesse, notamment en évitant d'utiliser des termes issus d'un observateur dans le calcul du régulateur triphasé.

En outre, un autre inconvénient du procédé décrit ci-dessus est qu'en supprimant le couplage entre les composantes du modèle diphasé de Park, on limite les degrés de liberté quant au contrôle des deux courants. Or, il est clair qu'il est plus efficace de contrôler une composante à l'aide de deux variables d'entrée qu'à l'aide d'une seule variable d'entrée.

Un autre but de l'invention est donc d'améliorer la maîtrise des variables de sortie du système triphasé.

Plus généralement, l'invention vise à permettre le calcul du régulateur triphasé sans réaliser de découplage pour le modèle diphasé de Park système triphasé.

Pour résoudre ce problème, l'invention exploite le fait que le repère de Park peut être assimilé à un repère complexe. Ce problème est résolu par les caractéristiques de la revendication 1. Les revendications dépendantes réciter modes de réalisation avantageux de l'invention.

On décrit ci-dessous l'invention dans le cas d'un système triphasé 1 constitué par une machine asynchrone 1.

Comme illustré sur la figure 1, le moteur asynchrone 1 est piloté par une carte 2 formant un variateur et comprenant un filtre numérique sur lequel est programmé un régulateur triphasé destiné à assurer le pilotage des variables d'entrée du système triphasé 1, par exemple des tensions par rétroaction des variables de sortie du système triphasé 1, par exemple des courants. Un onduleur non représenté peut être positionné entre la carte 2 et le moteur asynchrone 1 pour actionner ce dernier en fonction des paramètres de régulation reçus de la carte 2.

De façon connue, un tel système triphasé 1 a un modèle triphasé, de sorte que les variables d'entrées et les variables de sortie sont exprimées dans un repère triphasé sous la forme de trois composantes. Dans le cas d'un machine asynchrone 2 par exemple, les courants statoriques sont exprimés dans le modèle triphasé avec trois composantes triphasées ($i_{s1}$, $i_{s2}$, $i_{s3}$). De même, le flux rotorique et le couple sont exprimés dans le modèle triphasé ainsi que les trois composantes triphasées ($u_{s1}$, $u_{s2}$, $u_{s3}$) du signal de commande.

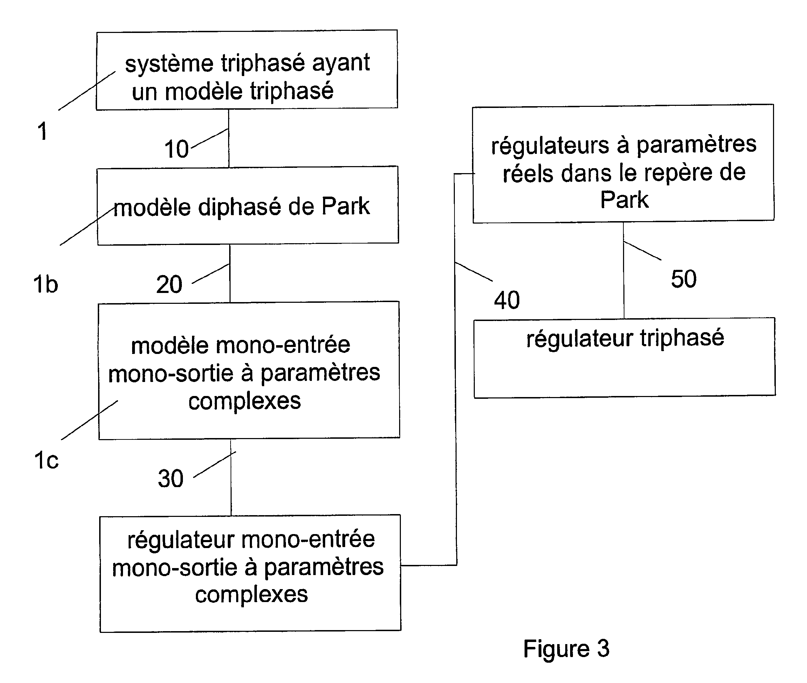

Illustré figure 3, ce modèle triphasé est fourni en entrée du procédé selon l'invention.

Dans une première étape 10, de façon connue en soi, on génère, à partir de ce modèle triphasé, un modèle diphasé de Park 1b de la machine asynchrone 1. Pour ce faire, de façon également connue, on applique une transformation de Concordia et une transformation de Park. Le contrôle de la machine asynchrone 1 dans le repère de Park (d, q) est constitué d'une part par le contrôle du flux rotorique et d'autre part par le contrôle de son couple. Pour ce faire, dans le cas d'une commande vectorielle on cale le flux rotorique sur l'axe d et le couple sur l'axe q, les axes d et q constituant les deux axes orthogonaux tournant du repère de Park.

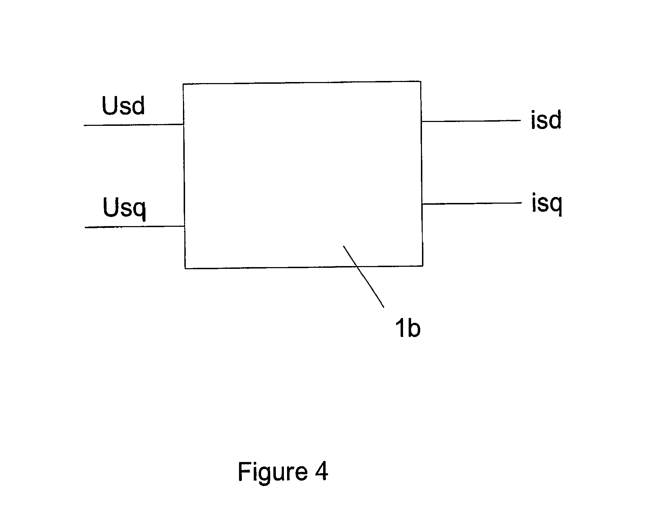

Comme illustré figure 4, dans ce modèle diphasé de Park 1b, les variables d'entrée et de sortie sont exprimées dans le repère de Park (d, q) et se décomposent selon deux composantes ($u_{sd}$, $u_{sq}$) et ($i_{sd}$, $i_{sq}$) dans ce repère. Le modèle diphasé de Park 1b est un modèle multivariable à deux entrées et deux sorties, les deux entrées et les deux sorties étant couplées.

Dans ce repère de Park, les équations régissant le fonctionnement dynamique de la machine asynchrone 1 sont les suivantes :

$$\begin{cases} \dfrac{d}{dt}\psi_{rd} = -\dfrac{1}{T_r}\psi_{rd} + \omega_r\psi_{rq} + \dfrac{L_m}{T_r}i_{sd} \\[3mm] \dfrac{d}{dt}\psi_{rq} = -\dfrac{1}{T_r}\psi_{rq} - \omega_r\psi_{rd} + \dfrac{L_m}{T_r}i_{sq} \\[3mm] \dfrac{d}{dt}i_{sd} = \dfrac{L_m}{b}\left(\dfrac{1}{T_r}\psi_{rd} + \omega\psi_{rq}\right) - ai_{sd} + \omega_s i_{sq} + \dfrac{1}{\sigma L_s}u_{sd} \\[3mm] \dfrac{d}{dt}i_{sq} = \dfrac{L_m}{b}\left(\dfrac{1}{T_r}\psi_{rq} - \omega\psi_{rd}\right) - ai_{sq} - \omega_s i_{sd} + \dfrac{1}{\sigma L_s}u_{sq} \\[3mm] \dfrac{d}{dt}\Omega = P\dfrac{L_m}{JL_r}(\psi_{rd}i_{sq} - \psi_{rq}i_{sd}) - \dfrac{t_l}{J} - \dfrac{f}{J}\Omega \end{cases}$$

avec :

$\psi_{rd}$ : flux rotorique selon l'axe d ;
$\psi_{rq}$ : flux rotorique selon l'axe q ;
$i_{sd}$ : courant statorique selon l'axe d ;
$i_{sq}$ : courant statorique selon l'axe q ;
$u_{sd}$: Signal de commande selon l'axe d ;
$u_{sq}$: Signal de commande selon l'axe q ;
$\omega$ : pulsation mécanique ;
$\omega_s$: pulsation des courants statoriques ;
$\omega_r$ : pulsation des courants rotoriques ;
$\omega_r = \omega_s - \omega$
$\Omega$: vitesse angulaire de rotation ;
$L_m$ : inductance magnétisante ;
$L_s$ : inductance cyclique statorique ;
$L_r$ : inductance cyclique rotorique ;
$T_r$ : constante de temps rotorique ;

$\sigma$ : coefficient de dispersion avec $\sigma = 1 - \dfrac{L_m^2}{L_s L_r}$ ) ;

$$a = \dfrac{L_r^2 R_s + L_m^2 R_r}{\sigma L_s L_r^2}$$

et

$$b = \sigma L_s L_r$$

P : nombre de paires de pôles ;
J : moment d'inertie total ;
$t_1$ : couple de charge ;
f : coefficient de frottement visqueux.

À partir du modèle défini ci-dessus, les termes de découplage mentionnés ci-dessus, $e_d$ et eq sont définis par :

$$e_d = \frac{L_m}{L_r}(\frac{1}{T_r}\psi_{rd} + \omega\psi_{rq}) + \sigma L_s \omega_s i_{sq}$$

$$e_q = \frac{L_m}{L_r}(\frac{1}{T_r}\psi_{rq} - \omega\psi_{rd}) - \sigma L_s \omega_s i_{sq}$$

En référence à la figure 3, selon l'invention, plutôt que de soustraire des termes de découplage $e_d$ et eq aux équations ci-dessus, on génère 20 un modèle mono-entrée mono-sortie à paramètres complexes à partir du modèle diphasé précédemment décrit.

Pour ce faire, on exploite le fait que l'axe d du repère de Park peut être vu comme l'axe réel du repère complexe, et l'axe q du repère de Park peut être vu comme l'axe imaginaire du repère complexe.

On définit alors :

$i_s$ un nombre complexe tel que $i_s = i_{sd} + j\, i_{sq}$ ;
$u_s$ un nombre complexe tel que $u_s = u_{sd} + j\, u_{sq}$ ;
avec j imaginaire pur, les variables is et us étant soulignées pour indiquer qu'il s'agit de variables complexes.

Avec ces nouveaux paramètres complexes, le système d'équation précédemment mentionné devient :

$$i_s(s) = \frac{1}{\sigma L_s} \cdot \frac{s + \frac{1}{T_r} + j(\omega_g - \omega)}{s^2 + s(a + \frac{1}{T_r} + j\omega_g + j(\omega_g - \omega)) + \frac{L_m^2}{bT_r}(j\omega - \frac{1}{T_r}) + (\frac{a + j\omega_g}{T_r}) + j(\omega_g - \omega)(a + j\omega_g)} u_s(s)$$

Les paramètres sont ceux donnés ci-dessus avec en plus :

s la variable de Laplace ;
$\omega_g = \omega_s$ ;
$u_{s1}$ est un nombre complexe tel que $u_{s1} = \_u_{sd1} + j\, u_{sq1}$ ;
$i_s$ est un nombre complexe tel que $i_s = i_{sd} + j\, i_{sq}$ ;
$u_s$ est un nombre complexe tel que $u_s = u_{sd} + j\, u_{sq}$ ;
j : imaginaire pur

Cette équation définit un modèle 1c du système triphasé 1 avec une seule variable d'entrée us et une variable de sortie is. Ce modèle est en outre linéaire.

Pour ce modèle mono-entrée mono-sortie 1c, on calcule 30 un régulateur 2c mono-entrée mono-sortie à paramètres complexes. Par exemple pour un régulateur 2c de type Proportionnel Intégral PI, on obtient :

$$\frac{u_s(s)}{\varepsilon(s)} = (K_{pr} + jK_{pi}) + \frac{K_{ir} + jK_{ii}}{s}$$

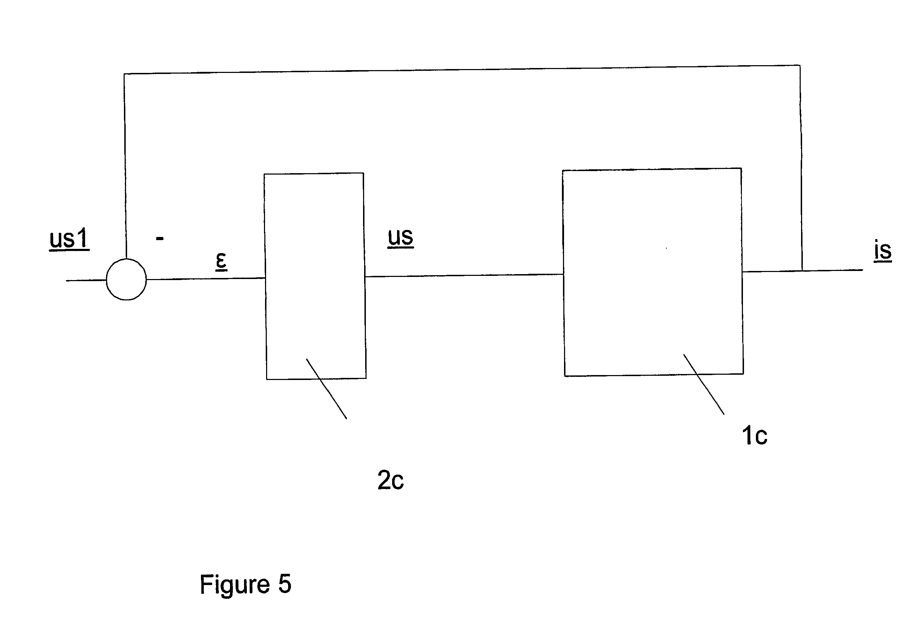

avec $\underline{\varepsilon}(s)$ correspondant au signal fournit en entrée du régulateur mono-entrée mono-sortie à paramètres complexes comme illustré figure 5.

Pour calculer le régulateur triphasé à partir de ce régulateur mono-entrée mono-sortie à paramètres complexes, on repasse d'abord 40 dans le repère de Park à l'aide des parties réelles et imaginaires du régulateur mono-entrée mono-sortie à paramètres complexes en considérant que l'axe d du repère de Park est l'axe réel du repère complexe, et l'axe q du repère de Park est l'axe imaginaire du repère complexe. Dans ce repère, le régulateur paramètres complexes $\underline{PI}$ s'écrit comme quatre régulateurs PI réels avec :

$$P11 = K_{pr} + \frac{K_{ir}}{s}$$

$$P12 = K_{pi} + \frac{K_{ii}}{s}$$

$$P21 = -K_{pi} - \frac{K_{ii}}{s}$$

$$P22 = K_{pr} + \frac{K_{ir}}{s}$$

À partir de ces régulateurs dans le repère de Park, on détermine alors 50, de façon connue en soi, le régulateur triphasé 2 dans le repère triphasé pour le modèle triphasé du système triphasé 1 par transformation inverse à l'aide notamment des transformées inverses de Park et de Concordia.

On décrit maintenant des variantes de l'invention.

On a décrit ci-dessus en détail un procédé pour calculer un régulateur triphasé d'une machine asynchrone 1. Il est toutefois entendu que l'invention peut être appliquée pour calculer un régulateur triphasé de tout système triphasé, et notamment un réseau électrique triphasé.

En outre, on a décrit ci-dessus le calcul d'un régulateur mono-entrée mono-sortie à paramètres complexes de type Proportionnel Intégrale. Il est toutefois entendu que d'autres structures de régulateur à paramètres complexes peuvent être utilisés. En outre, on peut également utiliser des techniques connues de réglage d'un régulateur mono-entrée mono-sortie au régulateur à paramètres complexes selon l'invention. En particulier, les techniques de placement des pôles, d'approche fréquentielle ou de commande optimale sont utilisables.

L'invention se rapporte également à un dispositif pour mettre en oeuvre le procédé précédemment décrit. Ce dispositif est agencé pour calculer un régulateur triphasé d'un système triphasé ayant un modèle triphasé, et comprend notamment

- des premiers moyens pour générer un modèle diphasé de Park du système triphasé à partir du modèle triphasé du système triphasé ;
- des deuxièmes moyens pour calculer le régulateur triphasé à partir du modèle diphasé de Park du système triphasé,

caractérisé en ce que:
les deuxièmes moyens comprennent

- des troisièmes moyens pour générer un modèle mono-entrée mono-sortie à paramètres complexes à partir du modèle diphasé de Park du système triphasé ;
- des quatrièmes moyens pour cal culer un régulateur mono-entrée mono-sortie à paramètres complexes pour le modèle mono-entrée mono-sortie à paramètres complexes ;
- des cinquièmes moyens pour calculer le régulateur triphasé à partir du régulateur mono-entrée mono-sortie à paramètres complexes.

Les premiers, deuxièmes, troisièmes, quatrièmes et cinquièmes moyens correspondent à des mémoires et des processeurs programmés pour réaliser les fonctions de calcul susmentionnées. Le dispositif peut donc être un ordinateur ou un système microprogrammable comprenant de tels moyens.

L'invention se rapporte également à un programme d'ordinateur comprenant une pluralité d'instructions qui, lorsqu'elles sont exécutées par un ordinateur, réalisent le procédé précédemment décrit pour un système triphasé ayant un modèle triphasé. Le programme peut être réalisé dans un langage informatique connu en soi et adapté à l'ordinateur sur lequel le programme sera exécuté.

L'invention se rapporte également à un procédé pour fabriquer un dispositif de contrôle d'un système triphasé comprenant des étapes dans lesquelles :

- on calcule un régulateur triphasé du système triphasé conformément au procédé précédemment décri t;
- on programme numérique le régulateur triphasé de sorte à réaliser un filtre numérique ;
- on insère le filtre numérique dans le dispositif de contrôle.

En fonctionnement, le dispositif de contrôle comprenant un filtre numérique dans lequel est programmé le régulateur peut être placé en entrée d'un onduleur qui actionne le système triphasé 1, correspondant par exemple à une machine asynchrone. Le dispositif de contrôle est par exemple une carte informatique comprenant le filtre numérique. L'onduleur se charge de faire varier la fréquence ainsi que l'amplitude des tensions de sorties suivant la consigne et la loi de commande déterminée par la carte informatique formant un variateur.

## Revendications

1.  Procédé pour calculer, à l'aide d'un ordinateur, un régulateur triphasé d'un système triphasé ayant un modèle triphasé, le procédé comprenant des étapes consistant à:

    - générer (10) un modèle diphasé de Park (1b) du système triphasé (1) à partir du modèle triphasé du système triphasé ;
    - calculer (20, 30, 40, 50) le régulateur triphasé à partir du modèle diphasé de Park (1b) du système triphasé ;

    l'étape consistant à calculer le régulateur triphasé à partir du modèle diphasé de Park du système triphasé comprend des étapes consistant à :

    - générer (20) un modèle mono-entrée mono-sortie à paramètres complexes (1c) à partir du modèle diphasé de Park (1b) du système triphasé (1) ;
    - calculer (30) un régulateur mono-entrée mono-sortie à paramètres complexes (2c) pour le modèle mono-entrée mono-sortie à paramètres complexes (1c) ;
    - calculer (40, 50) le régulateur triphasé à partir du régulateur mono-entrée mono-sortie à paramètres complexes (2c) ;

    **caractérisé en ce que** l'étape consistant à calculer le régulateur triphasé à partir du régulateur mono-entrée mono-sortie à paramètres complexes comprend des étapes consistant à :

    - calculer (40) quatre régulateurs à paramètres réels P11, P12, P21 et P22 dans le repère de Park associé au modèle diphasé de Park à l'aide de la partie réelle RE et de la partie imaginaire IM du régulateur mono-entrée mono-sortie à paramètres complexes, tel que ces quatre régulateurs ont pour valeur :

        o P11= RE ;
        o P12= IM ;
        o P21 = -IM ; et
        o P22= RE ; et

    - calculer (50) le régulateur triphasé par transformations inverses de Park et de Concordia des regulateurs à paramètres réels dans le repère de Park.

2.  Procédé selon la revendication 1, dans lequel l'étape consistant à générer un modèle diphasé de Park du système triphasé à partir du modèle triphasé du système triphasé comprend des étapes consistant à:

    appliquer une transformation de Concordia au modèle triphasé du système triphasé de sorte à générer un modèle diphasé de Concordia ;
appliquer une transformation de Park au modèle diphasé de Concordia de sorte à générer le modèle diphasé de Park.

3. Procédé selon l'une des revendications précédentes, dans lequel le régulateur mono-entrée mono-sortie à paramètres complexes est un régulateur linéaire.

4. Programme d'ordinateur comprenant une pluralité d'instructions qui, lorsqu'elles sont exécutées par un ordinateur, réalisent le procédé selon l'une des revendications 1 à 3 pour un système triphasé ayant un modèle triphasé.

5. Procédé pour fabriquer un dispositif de contrôle (2) d'un système triphasé (1) comprenant des étapes dans lesquelles :

- on calcule un régulateur triphasé du système triphasé conformément au procédé selon l'une des revendications 1 à 3 ;
- on programme numériquement le régulateur triphasé de sorte à réaliser un filtre numérique ;
- on insère le filtre numérique dans le dispositif de contrôle.

**Claims**

1. Method for calculating, using a computer, a three-phase regulator of a three-phase system having a three-phase model, the method comprising steps consisting in:

- generating (10) a two-phase Park model (1b) of the three-phase system (1) from the three-phase model of the three-phase system;
- calculating (20, 30, 40, 50) the three-phase regulator from the two-phase Park model (1b) of the three-phase system;

the step consisting in calculating the three-phase regulator from the two-phase Park model of the three-phase system comprises steps consisting in:

- generating (20) a single-input, single-output model with complex parameters (1c) from the two-phase Park model (1b) of the three-phase system (1);
- calculating (30) a single-input, single-output regulator with complex parameters (2c) for the single-input, single-output model with complex parameters (1c);
- calculating (40, 50) the three-phase regulator from the single-input, single-output regulator with complex parameters (2c);

**characterized in that** the step consisting in calculating the three-phase regulator from the single-input, single-output regulator with complex parameters comprises steps consisting in:

- calculating (40) four regulators with real parameters P11, P12, P21 and P22 in the Park coordinate system associated with the two-phase Park model using the real portion RE and the imaginary portion IM of the single-input, single-output regulator with complex parameters, such that these four regulators have the values:

  o P11 = RE;
  o P12 = IM;
  o P21 = -IM; and
  o P22 = RE; and

- calculating (50) the three-phase regulator by inverse Park and Concordia transformations of the regulators with real parameters in the Park coordinate system.

2. Method according to Claim 1, in which the step consisting in generating a two-phase Park model of the three-phase system from the three-phase model of the three-phase system comprises steps consisting in:

applying a Concordia transformation to the three-phase model of the three-phase system so as to generate a two-phase Concordia model;
applying a Park transformation to the two-phase Concordia model so as to generate the two-phase Park model.

3. Method according to one of the preceding claims, in which the single-input, single-output regulator with complex parameters is a linear regulator.

4. Computer program comprising a plurality of instructions which, when they are run by a computer, produce the method according to one of Claims 1 to 3 for a three-phase system having a three-phase model.

5. Method for manufacturing a control device (2) of a three-phase system (1) comprising steps in which:

- a three-phase regulator of the three-phase system is calculated in accordance with the method according to one of Claims 1 to 3;
- the three-phase regulator is digitally programmed so as to produce a digital filter;
- the digital filter is inserted into the control device.


**Patentansprüche**

1. Verfahren, um mit Hilfe eines Computers einen Dreiphasenregler eines Dreiphasensystems zu berechnen, das ein Dreiphasenmodell hat, wobei das Verfahren Schritte enthält, die darin bestehen:

- ein Park-Zweiphasenmodell (1b) des Dreiphasensystems (1) ausgehend von dem Dreiphasenmodell des Dreiphasensystems zu erzeugen (10);
- den Dreiphasenregler ausgehend von dem Park-Zweiphasenmodell (1b) des Dreiphasensystems zu berechnen (20, 30, 40, 50);

wobei der Schritt, der darin besteht, den Dreiphasenregler ausgehend von dem Park-Zweiphasenmodell des Dreiphasensystems zu berechnen, Schritte enthält, die darin bestehen:

- ein Mono-Eingangs-Mono-Ausgangs-Modell mit komplexen Parametern (1c) ausgehend von dem Park-Zweiphasenmodell (1b) des Dreiphasensystems (1) zu erzeugen (20);
- einen Mono-Eingangs-Mono-Ausgangs-Regler mit komplexen Parametern (2c) für das Mono-Eingangs-Mono-Ausgangs-Modell mit komplexen Parametern (1c) zu berechnen (30);
- den Dreiphasenregler ausgehend vom Mono-Eingangs-Mono-Ausgangs-Regler mit komplexen Parametern (2c) zu berechnen (40, 50);

**dadurch gekennzeichnet, dass** der Schritt, der darin besteht, den Dreiphasenregler ausgehend von dem Mono-Eingangs-Mono-Ausgangs-Regler mit komplexen Parametern zu berechnen, Schritte enthält, die darin bestehen:

- vier Regler mit realen Parametern P11, P12, P21 und P22 im dem Park-Zweiphasenmodell zugeordneten Park-Bezugssystem mit Hilfe des realen Teils RE und des imaginären Teils IM des Mono-Eingangs-Mono-Ausgangs-Reglers mit komplexen Parametern zu berechnen (40), derart, dass diese vier Regler als Wert haben:

    o P11 = RE;
    o P12 = IM;
    o P21 = -IM; und
    o P22 = RE; und

- den Dreiphasenregler durch inverse Park- und Concordia-Transformationen der Regler mit realen Parametern im Park-Bezugssystem zu berechnen (50).

2. Verfahren nach Anspruch 1, bei dem der Schritt, der darin besteht, ein Park-Zweiphasenmodell des Dreiphasensystems ausgehend von dem Dreiphasenmodell des Dreiphasensystems zu erzeugen, Schritte enthält, die darin bestehen:

eine Concordia-Transformation an das Dreiphasenmodell des Dreiphasensystems anzuwenden, um ein Concordia-Zweiphasenmodell zu erzeugen;

eine Park-Transformation an das Concordia-Zweiphasenmodell anzuwenden, um das Park-Zweiphasenmodell zu erzeugen.

3. Verfahren nach einem der vorhergehenden Ansprüche, bei dem der Mono-Eingangs-Mono-Ausgangs-Regler mit komplexen Parametern ein linearer Regler ist.

4. Computerprogramm, das eine Vielzahl von Anweisungen enthält, die, wenn sie von einem Computer ausgeführt werden, das Verfahren nach einem der Ansprüche 1 bis 3 für ein Dreiphasensystem durchführen, das ein Dreiphasenmodell hat.

5. Verfahren zur Herstellung einer Kontrollvorrichtung (2) eines Dreiphasensystems (1), das Schritte enthält, in denen:

   - ein Dreiphasenregler des Dreiphasensystems gemäß dem Verfahren nach einem der Ansprüche 1 bis 3 berechnet wird;
   - der Dreiphasenregler digital programmiert wird, um ein digitales Filter herzustellen;
   - das digitale Filter in die Kontrollvorrichtung eingefügt wird.

Figure 1

EP 2 195 919 B1

Figure 2

EP 2 195 919 B1

```
┌─────────────────────────────┐
│    système triphasé ayant    │
│     un modèle triphasé       │
└─────────────────────────────┘
1              10

┌─────────────────────────────┐        ┌─────────────────────────────┐
│    modèle diphasé de Park    │        │  régulateurs à paramètres    │
└─────────────────────────────┘        │   réels dans le repère de    │
1b             20               │        Park              │
                                        └─────────────────────────────┘
┌─────────────────────────────┐                      50
│      modèle mono-entrée       │
│  mono-sortie à paramètres    │        ┌─────────────────────────────┐
│         complexes            │   40   │     régulateur triphasé      │
└─────────────────────────────┘        └─────────────────────────────┘
1c             30

┌─────────────────────────────┐
│   régulateur mono-entrée     │
│  mono-sortie à paramètres    │
│         complexes            │
└─────────────────────────────┘
```

Figure 3

Usd ──────┐
          │    ┌──────────────┐
          └────┤              ├──────── isd
               │              │
Usq ──────┐    │              │
          └────┤              ├──────── isq
               │          1b  │
               └──────────────┘

Figure 4

Figure 5

EP 2 195 919 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6166928 A
- US 2004056487 A

**Littérature non-brevet citée dans la description**

- **FERNANDO BRIZ DEL BLANCO et al.** Dynamic Analysis of Current Regulators for AC Motors Using Complex Vectors. *IEEE TRANSACTIONS ON INDUSTRY APPLICATIONS,* 01 Décembre 1999, vol. 35 (6), ISSN 0093-9994
- **BRIZ F et al.** Analysis and design of current regulators using complex vectors. *INDUSTRY APPLICATIONS CONFERENCE,* 05 Octobre 1997, vol. 2, ISBN 978-0-7803-4067-1, 1504-1511
- **DALTON P M et al.** A study of induction motor current control using the complex number representation. *A study of induction motor current control using the complex number representation,* 01 Octobre 1989, 355-361
- **GATARIC S et al.** Modeling and design of three-phase systems using complex transfer functions. *POW ER ELECTRON ICS SPECIALISTS CONFERENCE,* 27 Juin 1999, vol. 2, ISBN 978-0-7803-5421-0, 691-697